# EUROPÄISCHE PATENTSCHRIFT

(11) **EP 2 669 217 B1**
(45) Veröffentlichungstag und Bekanntmachung des Hinweises auf die Patenterteilung: **13.08.2014**
(21) Anmeldenummer: 13169674.2
(22) Anmeldetag: 29.05.2013
(51) Int. Cl.: B65G 1/04

(54) **Vorrichtung zur Ein- und Auslagerung von Stückgut**
Device for the storage and removal of piece goods
Dispositif pour le chargement et le déchargement de marchandises au détail

(30) Priorität: 01.06.2012 DE 102012104751
(43) Veröffentlichungstag der Anmeldung: 04.12.2013
(73) Patentinhaber: Dematic Accounting Services GmbH, 63073 Offenbach (DE)
(72) Erfinder: Rehm, Pascal, 63456 Hanau (DE)
(74) Vertreter: Moser & Götze

(56) Entgegenhaltungen:
- EP-A1- 2 433 882

## Beschreibung

Die Erfindung betrifft eine Vorrichtung zur Ein- und Auslagerung von Stückgut in bzw. aus einem Lagerfach mit einer verfahrbaren Plattform zur Aufnahme des Stückguts, die ein- und ausfahrbare Ein- und Auslagerelemente aufweist, die mindestens einen Mitnehmer zur Mitnahme des Stückguts umfassen, der zwischen einer Ruhestellung und einer Mitnahmestellung mittels eines Antriebs verschwenkbar ist.

Aus der EP 0 775 665 A1 ist eine Vorrichtung zum Aus- oder Einfahren von Stückgut in einem Warenhochlager mit einem in einem einfach breiten Lagergang verfahrbaren Regalbediengerät und mit einer Hubeinrichtung, bestehend aus einem sich in Lagergangrichtung erstreckenden Grundrahmen, der an lotrechten Führungen des Regalbediengerätes höhenverstellbar ist, mit einer Ladeplattform, auf der eine zumindest zweifach in Richtung der Ein- bzw. Auslagerung verfahrbare als Teleskopgabel ausgebildete Fördereinrichtung angeordnet ist, bekannt, wobei der Grundrahmen einen in ein Regal verfahrbaren Teleskopwagen trägt, an dem ein zumindest zweifach senkrecht zur Lagergangrichtung unter ein darüber liegendes Fach des Warenhochlagers ausfahrbares Flachteleskop gelagert ist und am vordersten Teleskopabschnitt jeweils hinter das jeweilige Stückgutende nach unten in das Stückgutprofil oder in eine etwa waagerechte Lage unter dem Teleskopwagen gegenläufig schwenkbare Mitnehmer- bzw. Anschlagarmpaare drehantreibbar gelagert sind.

Aus der EP 2 234 904 B1 ist eine entsprechende Variante bekannt, bei der die Teleskoparme nicht oberhalb des Stückguts ausfahren und die Mitnehmer von oben nach unten schwenken, sondern hier sind die Teleskoparme jeweils seitlich des Stückguts angeordnet und die Mitnehmer verschwenken zwischen einer etwa horizontalen Arbeitsposition und einer etwa vertikalen Ruheposition.

Weiterhin offenbart die EP 2 433 882 A1 eine Vorrichtung gemäß dem Oberbegriff des Anspruchs 1.

Die Mitnehmer werden in beiden Fällen über eine Welle bzw. einem Gestänge von einem Motor angetrieben.

Um hohe Stellgeschwindigkeiten und somit hohe Aus- und Einlagerleistungen zu erzielen, müssen u.a. auch die Mitnehmer schnell und mit hoher Beschleunigung bewegt bzw. verschwenkt werden. Allerdings muss die jeweilige Bewegung auch in der Endstellung (Ruhe- bzw. Arbeitsstellung) gedämpft enden oder gegen einen Anschlag fahren. Ansonsten besteht die Gefahr, dass einerseits der Motor verschleißt und andererseits die Mitnehmer brechen.

Aufgabe der Erfindung ist es daher, eine Vorrichtung zur Ein- und Auslagerung mit mindestens einem verschwenkbaren Mitnehmer bereitzustellen, wobei eine dämpfende Kupplung zwischen Mitnehmer und dessen Antrieb vorgesehen ist.

Diese Aufgabe wird durch die in Anspruch 1 angegebene Vorrichtung gelöst.

Erfindungsgemäß ist erkannt worden, dass wenn zwischen Antrieb und Mitnehmer eine dämpfende Drehschub-Kupplung angeordnet ist, einerseits eine zusätzliche Welle zwischen Antrieb und Mitnehmer entfallen kann und andererseits Stöße und ein Winkelversatz durch den elastischen Kunststoff ausgleichbar sind.

In einer bevorzugten Ausführungsform ist die Drehschub-Kupplung eine längliche Hülse mit einem elastischen Kunststoffkern. Der Kunststoffkern ist bevorzugt direkt in die Hülse eingespritzt; kann aber auch oder eingepresst, eingeschraubt, eingeklebt usw. werden.

Vorzugsweise füllt der Kunststoffkern die Hülse aus, d.h. der Kern füllt den gesamten Innenraum der Hülse aus.

Wenn der Kunststoffkern antriebsseitig eine Ausnehmung zur Aufnahme der Antriebswelle des Antriebs aufweist, kann ohne weitere Bauteile usw. der Antrieb direkt mit der Kupplung verbunden werden.

Wichtig ist herauszustellen, dass die Kraftübertragung zwischen dem Kunststoffkern und dem Rohr kraftschlüssig erfolgt, also durch die Reibkraft des Kunststoffs am Metall und nicht durch einen Formschluss.

Dabei ist es sinnvoll, wenn die Ausnehmung zur kraftschlüssigen und/oder formschlüssigen Aufnahme der Antriebswelle ausgestaltet ist. Sie kann also einen eckigen oder gezackten Querschnitt aufweisen. Insbesondere hat sich eine herausgestellt, dass eine Ausnehmung mit einer im Querschnitt besehen länglichen Erstreckung mit abgerundeten Stirnseiten, insbesondere mit einer Doppel-D-Form die Drehmomentübertragung gut erfüllt. Unter Doppel-D-Form wird eine Querschnittsform der Ausnehmung verstanden, die in etwa die Gestalt von zwei Rücken an Rücken angeordneten "D" Buchstaben aufweist.

Eine besonders gute Kombination aus Drehmomentübertragung und Elastizität ergibt sich, wenn der Kunststoff des Kunststoffkerns eine Härte zwischen ca. 35 und 95 Shore A, insbesondere zwischen 50 und 60 Shore A aufweist.

In einer ebenfalls besonders bevorzugten Ausführungsform ist der Mitnehmer auf die Hülse außen aufgespritzt. Denkbar ist jedoch auch eine geschraubte, geklemmte oder geklebte Befestigung der Mitnehmer auf der jeweiligen Hülse.

Die Einheit aus Antrieb, Mitnehmer und Kupplung lässt sich besonders einfach als selbsttragendes Bauteil einer Vorrichtung zur Ein- und Auslagerung bereitstellen, wenn die Drehschub-Kupplung in einem Gleitlager insbesondere einer Gleitlagerbundbuchse, an einem Träger am Antrieb gelagert ist.

Sinnvollerweise sind die Ein- und Auslagerelemente parallel aus- und einfahrbare Teleskoparme beidseitig der Plattform, d.h. das jeweilige Stückgut mit oder ohne Ladehilfsmittel (z.B. Behälter, Tablar etc.) ist zwischen den seitlich daneben angeordneten Teleskoparmen, die ggf. aufeinander zu einstellbar sind, auf der Plattform angeordnet (bzw. wird angeordnet) und die Teleskoparme verschieben das Stückgut mit oder ohne Ladehilfsmittel durch die in die Mitnahmestellung geschwenkten beidseitigen Mitnehmer.

Sinnvollerweise umfasst jeder Teleskoparm an jedem Ende einen Mitnehmer und ist beidseitig ausfahrbar, so dass Lagerfächer zu beiden Seiten des Gangs eines Regallagers bedienbar sind. Dies gilt entsprechend auch allgemein für die Ein- und Auslagerelemente, unabhängig von ihrer spezifischen Ausgestaltung.

Die Erfindung betrifft ebenfalls die Verwendung der erfindungsgemäßen Vorrichtung in einem Regalbediengerät oder Shuttle bzw. Satellitenfahrzeug.

Regalbediengeräte sind säulen- oder schienengeführte, einspurige Fahrzeuge zur Bedienung der Waren in einem Hochregallager. Die Bewegung eines Regalbediengerätes erfolgt in drei Achsen: a) mit der Fahreinheit in der Ganglängsrichtung, b) mit der Hubeinheit in der vertikalen Richtung und mit der c) Lastaufnahmeeinheit (Vorrichtung zur Ein- und Auslagerung) in der Gangquerrichtung, d.h. quasi in das Regal hineingreifend. Der Automatisierungsgrad reicht von manuell bis vollständig automatisiert.

Shuttle oder Satellitenfahrzeuge sind dagegen schienengebundene autonome von einer Zentrale aus gesteuerte Fahrzeuge, die über die Schienen mit Strom und ggf. Signalen der Zentrale versorgt werden, zum Ein- und Auslagern von Behältern, Tablaren, Stückgütern etc. in ein oder aus einem Lager, wobei die Behälter usw. in mehreren Lagerregalgassen und Lagerregalebenen in Regalfächern (ggf. mehrfach tief) gelagert werden. Diese Fahrzeuge bedienen üblicherweise nur eine einzige Ebene, können aber ggf. über Lifte die Ebenen wechseln.

Weitere Merkmale und Einzelheiten der Erfindung ergeben sich aus der nachfolgenden Beschreibung der Zeichnung. Es zeigen:
- Fig. 1: eine schematische Seitenansicht auf ein Shuttle;
- Fig. 2: eine Draufsicht von oben auf das Shuttle aus Figur 1,

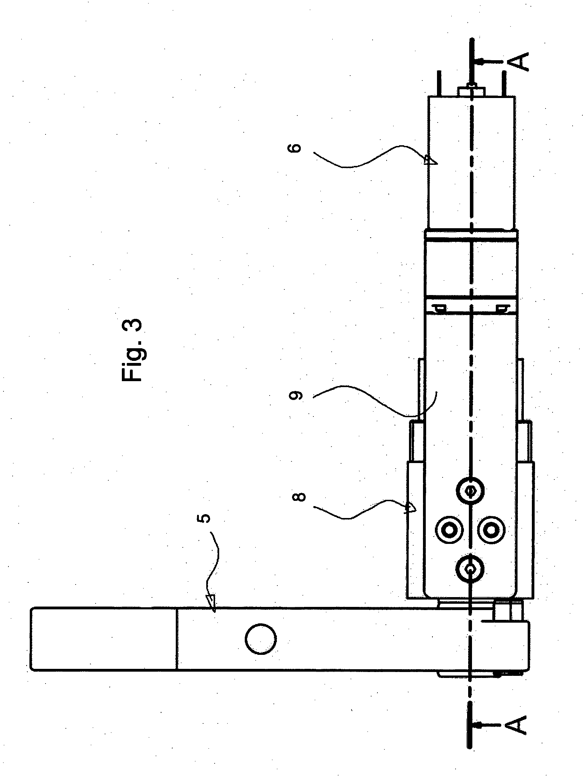

- Fig. 3: eine Baueinheit aus Mitnehmer und Antrieb in der schematischen Seitenansicht;

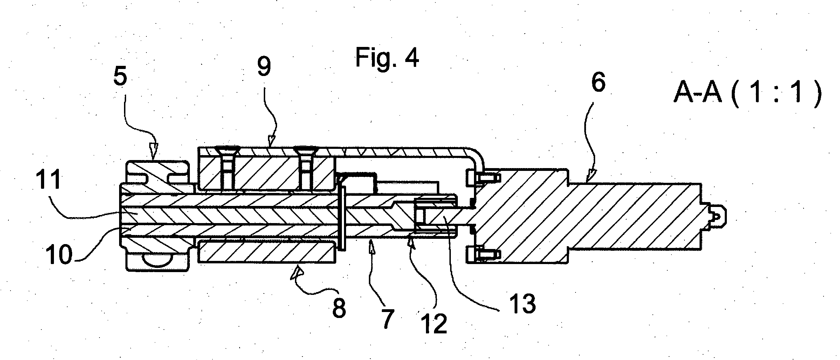

- Fig. 4: eine Schnittansicht durch die Baueinheit aus Figur 3 entlang der Linie A-A;

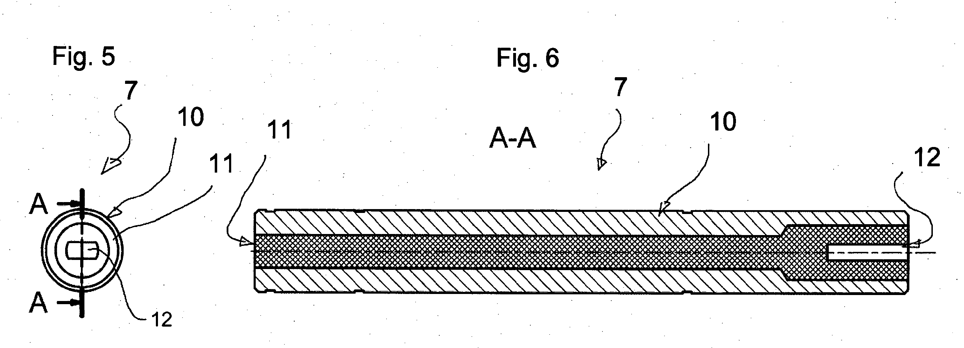

- Fig. 5: eine Draufsicht auf die Stirnseite der Kupplung und
- Fig. 6: eine vergrößerte Schnittansicht durch die Kupplung aus Figur 5.

In den Figuren ist ein als Ganzes mit 1 bezeichnetes Shuttle dargestellt. Es umfasst eine in der Breite (Pfeil X) verstellbare Ladefläche für Stückgüter. Beidseitig der Ladefläche 2 sind je ein in Y-Richtung, also quer zur Fahrtrichtung, ausfahrbarer Teleskoparm 3 angeordnet. Auf einer Seite ist das Gehäuse 4 für die Steuerungselektronik, Antrieb und Kommunikation angeordnet.

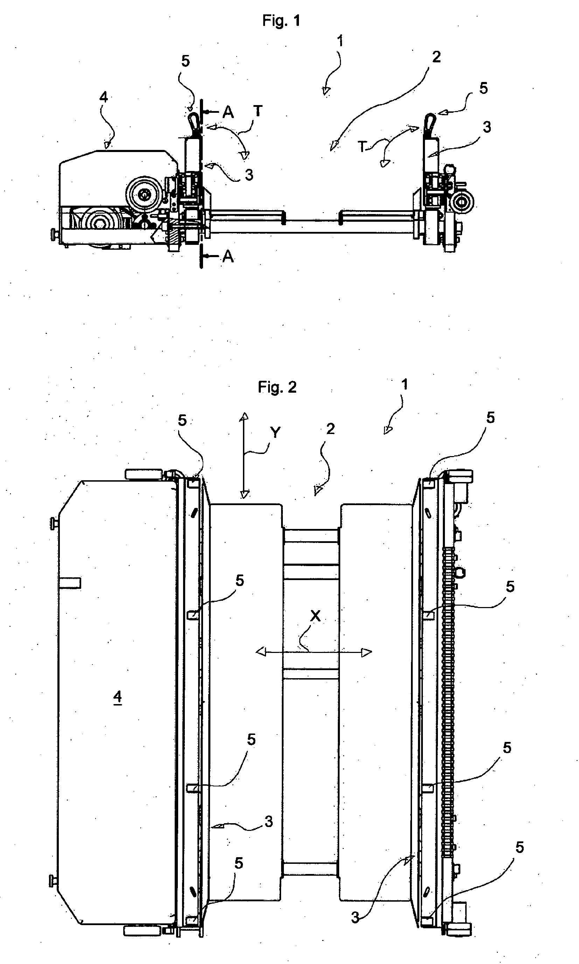

Die Teleskoparme 3 weisen jeweils vier sogenannte Finger oder Mitnehmer 5 auf, die zwischen einer Ruheposition (dargestellt) und einer Arbeitsstellung im Sinne des Pfeils T (vgl. Figur 1) verschwenkbar sind. In der Arbeitsstellung stehen die Finger 5 in die Ladefläche 2 hinein und erlauben es so, Stückgüter durch Schieben zu entladen oder Hintergreifen und Ziehen aufzunehmen. Durch die Verwendung von jeweils vier Fingern 5 pro Teleskoparm werden drei Bereiche in der Ladefläche geschaffen. Diese können für eine variable Beladung unterschiedlich verwendet bzw. eingeteilt werden, je nachdem welche Fingerpaare verwendet werden.

Die Finger 5 werden von einem elektrischen Getriebemotor 6 verschwenkt. Die Finger 5 sind dabei über eine Drehschub-Kupplung 7 mit dem Ausgang des Getriebemotors 6 verbunden. Die Drehschub-Kupplung 7 ist in einer Gleitlagerbuchse 8 an einem Träger 9 am Antrieb 6 gelagert.

Die Drehschub-Kupplung 7 besteht aus einer länglichen Hülse 10 mit einem elastischen Kunststoffkern 11, wobei der Kunststoffkern die Hülse ausfüllt. Der Kunststoff des Kunststoffkerns 11 weist eine Härte zwischen ca. 50 und 60 Shore A auf.

Der Kunststoffkern 11 weist antriebsseitig eine Ausnehmung 12 zur Aufnahme der Antriebswelle 13 des Getriebemotors 6 auf.

Die Ausnehmung 12 weist im Querschnitt besehen eine längliche Erstreckung mit abgerundeten Stirnseiten auf, so dass eine Art Doppel-D-Form entsteht, die zur kraftschlüssigen und formschlüssigen Aufnahme der Antriebswelle 13 ausgestaltet ist.

Zur Verbindung mit der Kupplung 7 ist der jeweilige Mitnehmer 5 auf die Hülse 10 der Drehschub-Kupplung 7 aufgespritzt.

## Patentansprüche

1. Vorrichtung zur Ein- und Auslagerung von Stückgut in bzw. aus einem Lagerfach mit einer verfahrbaren Plattform zur Aufnahme des Stückguts, die ein- und ausfahrbare Ein- und Auslagerelemente (3) aufweist, die mindestens einen Mitnehmer (5) zur Mitnahme des Stückguts umfassen, der zwischen einer Ruhestellung und einer Mitnahmestellung mittels eines Antriebs (6) verschwenkbar ist, **dadurch gekennzeichnet, dass** zwischen Antrieb (6) und Mitnehmer (5) eine dämpfende Drehschub-Kupplung (7) bestehend aus einer länglichen Hülse (10) mit einem elastischen Kunststoffkern (11) angeordnet ist.

2. Vorrichtung nach Anspruch 1, **dadurch gekennzeichnet, dass** der Kunststoffkern (11) die Hülse (10) ausfüllt.

3. Vorrichtung nach Anspruch 1 oder 2, **dadurch gekennzeichnet, dass** der Kunststoffkern (11) antriebsseitig eine Ausnehmung (12) zur Aufnahme der Antriebswelle (13) des Antriebs (6) aufweist.

4. Vorrichtung nach Anspruch 3, **dadurch gekennzeichnet, dass** die Ausnehmung (12) zur kraftschlüssigen und/oder formschlüssigen Aufnahme der Antriebswelle (6) ausgestaltet ist.

5. Vorrichtung nach Anspruch 4, **dadurch gekennzeichnet, dass** die Ausnehmung (12) im Querschnitt besehen eine längliche Erstreckung mit abgerundeten Stirnseiten aufweist, insbesondere eine Doppel-D-Form.

6. Vorrichtung nach einem der vorhergehenden Ansprüche, **dadurch gekennzeichnet, dass** der Kunststoff des Kunststoffkerns (11) eine Härte zwischen ca. 35 und 95 Shore A aufweist.

7. Vorrichtung nach einem der vorhergehenden Ansprüche, **dadurch gekennzeichnet, dass** der Mitnehmer (5) auf die Hülse (10) der Drehschub-Kupplung (7) aufgespritzt ist.

8. Vorrichtung nach einem der vorhergehenden Ansprüche, **dadurch gekennzeichnet, dass** die Drehschub-Kupplung (7) in einem Gleitlager, insbesondere einer Gleitlagerbuchse (8), an einem Träger (9) am Antrieb (6) gelagert ist.

9. Vorrichtung nach einem der vorhergehenden Ansprüche, **dadurch gekennzeichnet, dass** die Ein- und Auslagerelemente (3) parallel aus- und einfahrbare Teleskoparme beidseitig der Plattform sind.

10. Verwendung einer Vorrichtung nach einem der vorhergehenden Ansprüche in einem Regalbediengerät oder einem Shuttle (1).

## Claims

1. Apparatus for the storage and removal of piece goods into and out of a storage compartment with a movable platform for receiving the piece goods, which has extendable and retractable storage and removal elements (3), which include at least one engagement member (5) for engaging the piece goods, which is pivotable between a rest position and an engagement position by means of an actuator (6), **characterised in that** arranged between the actuator (6) and engagement member (5) there is a cushioning rotary thrust coupling (7) consisting of an elongate sleeve (10) with an elastic plastic core (11).

2. Apparatus claimed in claim 1, **characterised in that** the plastic core (11) fills the sleeve (10).

3. Apparatus claimed in claim 1 or 2, **characterised in that** the plastic core (11) has a recess (12) on the drive side for receiving the drive shaft (13) of the actuator (6).

4. Apparatus claimed in claim 3, **characterised in that** the recess (12) is constructed for force-locking and/or form-locking reception of the drive shaft (6).

5. Apparatus claimed in claim 4, **characterised in that**, seen in cross section, the recess (12) is elongate with rounded end faces, particularly a double D shape.

6. Apparatus claimed in one of the preceding claims, **characterised in that** the plastic material of the plastic core (11) has a hardness between ca. 35 and 95 Shore A.

7. Apparatus as claimed in one of the preceding claims, **characterised in that** the engagement member (5) is moulded onto the sleeve (10) of the rotary thrust coupling (7).

8. Apparatus as claimed in one of the preceding claims, **characterised in that** the rotary thrust coupling (7) is mounted in a slide bearing, particularly a plain bearing bush (8) on a carrier (9) on the actuator (6).

9. Apparatus as claimed in one of the preceding claims, **characterised in that** the storage and removal elements (3) are telescopic arms on both sides of the platform, which are extendible and retractable parallel to one another.

10. Use of an apparatus as claimed in one of the preceding claims in a shelf service unit or a shuttle (1).

## Revendications

1. Dispositif destiné à stocker et déstocker des marchandises de détail vers resp. depuis un compartiment de stockage, ledit dispositif comportant une plate-forme mobile qui est destinée à recevoir la marchandise de détail et qui comporte des éléments de stockage et de déstockage (3) extensibles et rétractables, lesquels comportent un ou plusieurs éléments d'accrochage (5) qui sont destinés à accrocher la marchandise de détail et qui sont aptes à pivoter entre une position de repos et une position d'accrochage à l'aide d'un moyen entraînement (6), **caractérisé en ce qu'**un moyen amortisseur d'accouplement et de poussée rotatif (7), constitué d'un manchon allongé (10) doté d'un noyau en matière synthétique élastique (11), est disposé entre le moyen d'entraînement (6) et l'élément d'accrochage (5).

2. Dispositif selon la revendication 1, **caractérisé en ce que** le noyau en matière synthétique (11) remplit le manchon (10).

3. Dispositif selon la revendication 1 ou 2, **caractérisé en ce que** le noyau en matière synthétique (11) comporte, du côté du moyen d'entraînement, un évidement (12) destiné à recevoir l'arbre d'entraînement (13) du moyen d'entraînement (6).

4. Dispositif selon la revendication 3, **caractérisé en ce que** l'évidement (12) est conformé pour recevoir l'arbre d'entraînement (6) via une liaison par engagement de formes et/ou par engagement de forces.

5. Dispositif selon la revendication 4, **caractérisé en ce que** l'évidement (12) présente, dans une vue en coupe transversale, une extension allongée dotée de côtés frontaux arrondis, en particulier une forme en double D.

6. Dispositif selon l'une des revendications précédentes, **caractérisé en ce que** la matière synthétique du noyau en matière synthétique (11) a une dureté comprise entre 35 et 95 Shore A environ.

7. Dispositif selon l'une des revendications précédentes, **caractérisé en ce que** l'élément d'accrochage (5) est moulé par injection sur le manchon (10) du moyen d'accouplement et de poussée rotatif (7).

8. Dispositif selon l'une des revendications précédentes, **caractérisé en ce que** le moyen d'accouplement et de poussée rotatif (7) est monté dans un palier lisse, en particulier un coussinet lisse (8), au niveau d'un support (9) du moyen d'entraînement (6).

9. Dispositif selon l'une des revendications précédentes, **caractérisé en ce que** les éléments de stockage et de déstockage (3) sont des bras télescopiques extensibles et rétractables en parallèle des deux côtés de la plate-forme.

10. Utilisation d'un dispositif selon l'une des revendications précédentes dans un gerbeur ou une navette (1).
